# EUROPEAN PATENT APPLICATION

(11) **EP 2 330 026 A1**
(43) Date of publication of application: **08.06.2011**
(21) Application number: 10425042.8
(22) Date of filing: 18.02.2010
(51) Int. Cl.: B62K 27/02, B62K 27/00

(54) **Foldable bicycle trailer**

(30) Priority: 01.12.2009 BR PI0903518
(71) Applicant: Pappalardo, Juliano, Pescara, Abruzzo (IT)
(72) Inventor: Pappalardo, Juliano, Pescara, Abruzzo (IT)

(57) **Abstract**

The present invention concerns a land vehicle for human or goods transportation, which moves when towed by a bicycle, with the objective to decrease the traffic and enviromental impacts; it may be folded to save storage space, besides being versatile due to a u-shaped crossbar (3) and a opposite u-shaped crossbar (2).

## Description

### Field of the Invention

The present invention concerns a land vehicle for human or goods transportation, which moves when towed by a bicycle, with the objective to decrease the traffic and enviromental impacts; it may be folded to save storage space and allow other types of loading.

### Background of the Invention

Land vehicles for human or materials transportation are already known, such as: automobiles, trucks, motorcycles, bicycles, tricycles and others.

Some disadvantages can be attributed to the vehicles cited, for instance, automobiles and trucks occupy much space on the ways and cause a heavy enviromental impact due to the gases emitted by their motors; motorcycles are less spacious, nevertheless its usage also impacts the enviroment, tricycles don't cause this problem neither are spacious, they are good for those who want a bigger load capacity than that offered by the bicycle, but are considered heavy and unnecessary if they travel empty.

### Summary of the Invention

Having in mind the disadvantages of the preexisting vehicles and considering that bicycles are world-wide diffused because of their simplicity which results in low acquisition cost and maintenance, it has been proposed a bicycle trailer, object of the present patent, which basically consists of two wheels side by side attached to a bicycle by means of a chassis which comprises two u-shaped crossbars for the disposal of the passengers seat or load to be transported.

Considering that the trailer will be towed by a bicycle, a human-powered vehicle, and will allow the installation of pedals for passengers assist, its usage is ecologically correct.

The trailer can be connected to any bicycle and anytime when necessary, it can also be connected to other similar trailer to allow more load capacity.

The main innovation are the u-shaped crossbars that makes the trailer foldable for storage space reduction, e.g.: inside a car boot or inside a wardrobe, and vesatile, e.g.: usage for goods or person transport.

### Brief description of the drawings

- Fig. 1: is a perspective view of a first model of trailer, which is connected to a generic model of bicycle.
- Fig. 2: is a perspective view of the other model of trailer, which is connected to a generic model of bicycle.
- Fig. 3: shows the model of fig. 1 with space for load accommodation.
- Fig. 4.1: shows a foldable trailer's chassis centrally bipartite
- Fig. 4.2: shows other foldable trailer's chassis centrally bipartite
- Fig. 5: shows the model of fig. 1 endowed with auxiliary pedaling system.
- Fig. 6: shows the model of fig. 2 endowed with auxiliary pedaling system.
- Fig. 7: shows the model of fig. 1 endowed with a auxiliary wheel.
- Fig. 8: shows the model of fig. 2 endowed with a auxiliary wheel.
- Fig. 9: shows the model of fig. 8 whose auxiliary wheel has pedals for assistance.
- Fig. 10: shows the model of fig. 9 whose auxiliary wheel has pedals for assistance.
- Fig. 11: shows a trailer connected to a trailer connected to a generical bicycle.

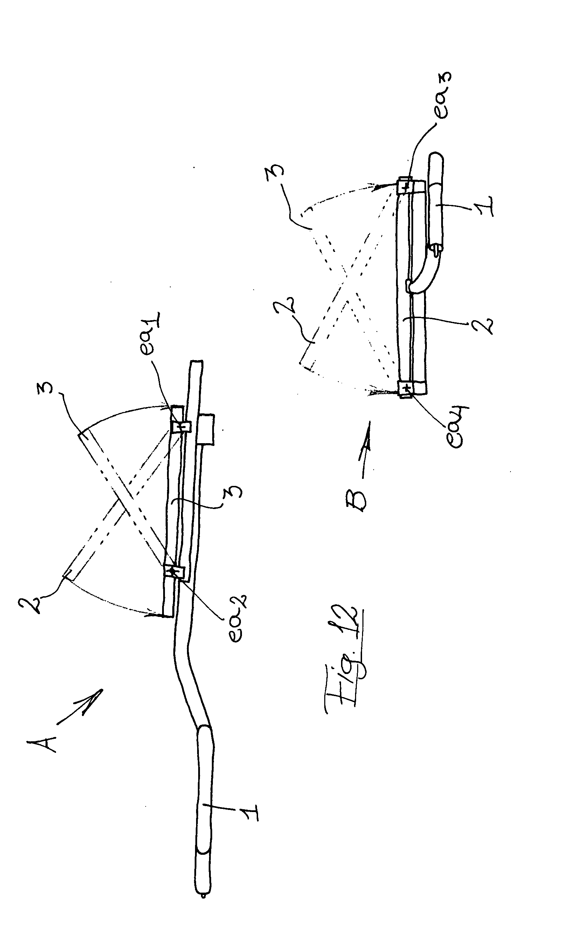

- Fig. 12: shows the trailers of fig. 1 and 2 folded.

### Detailed description of preferential embodiments

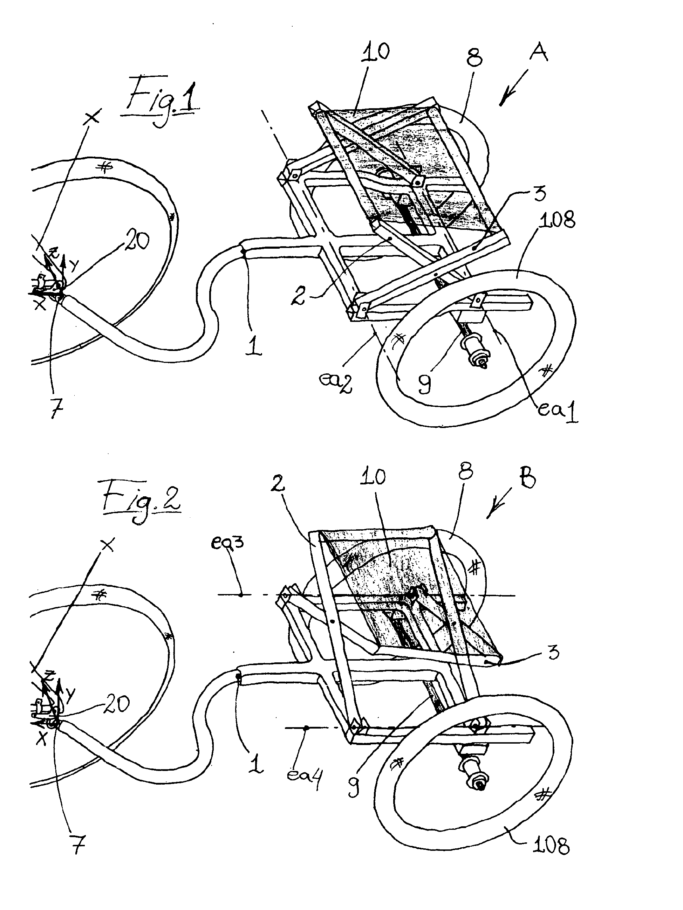

According to fig. 1 and 2, the object of the present patent, foldable trailer A or B comprises three structural parts: a chassis 1, a u-shaped crossbar 3, and a opposite u-shaped crossbar 2, the u-shaped crossbar 3 and opposite u-shaped crossbar 2 are located on the chassis 1; the foldable trailer A or B also comprises a rotation axle 9 of the wheels and a connection joint 7.

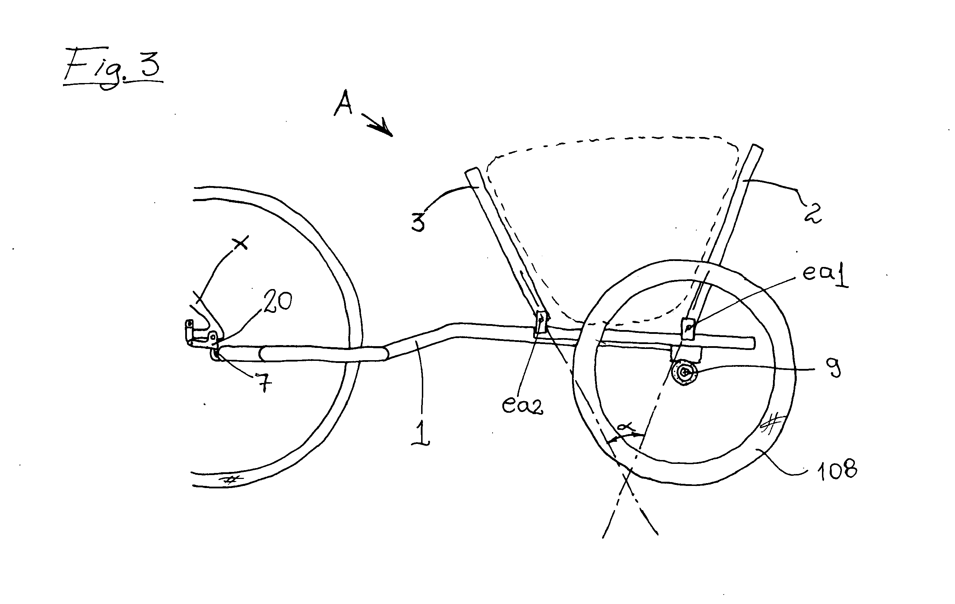

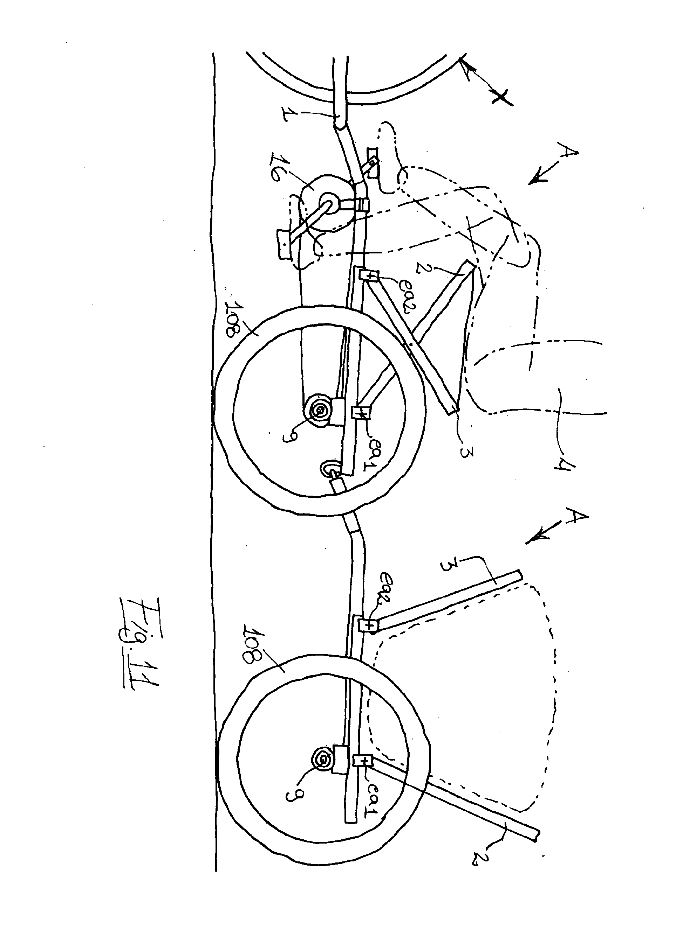

Fig. 1 shows the foldable trailer's model A wherein the opposite u-shaped crossbar 2 and the u-shaped crossbar 3 are fixed at their lower ends to the top of the chassis 1 via an anterior pivotal axis e_{A1} and an posterior pivotal axis e_{A2} respectively. When u-shaped crossbar 3 and opposite u-shaped crossbar 2 cross each other, preferentially, at their median portions, they support an element 10, preferentially a flexible fabric, that supports a passenger 4, indicated in fig. 11. In case that they don't cross but form an angle α between themselves, a space for load accommodation is created, as indicates the dashed line of fig. 3 and 11.

The model A of foldable trailer is characterized by its anterior pivotal axis e_{A1} and posterior pivotal axis e_{A2} be orthogonal to trailer's movement direction.

Under the chassis 1 there is a rotation axle 9 of a right wheel 8 and a left wheel 108, that run on the ground. The connection joint 7 is located at the front end of chassis 1 and connect, via hitch 20, the trailer A or B to the bicycle X, such connection will be described further.

Fig. 2 shows the foldable trailer's second model, the model B. As can be seen u-shaped crossbar 3 and opposite u-shaped crossbar 2 now have their lower ends fixed to right and left sides of top of chassis 1 respectively; the pivotal axis now defined by right pivotal axis e_{A3} and left pivotal axis e_{A4} have the same direction of the trailer's movement. Equally to model A, when the u-shaped crossbar 3 and opposite u-shaped crossbar 2 of model B cross each other, they support an element 10, preferentially a flexible fabric, that supports a passenger 4.

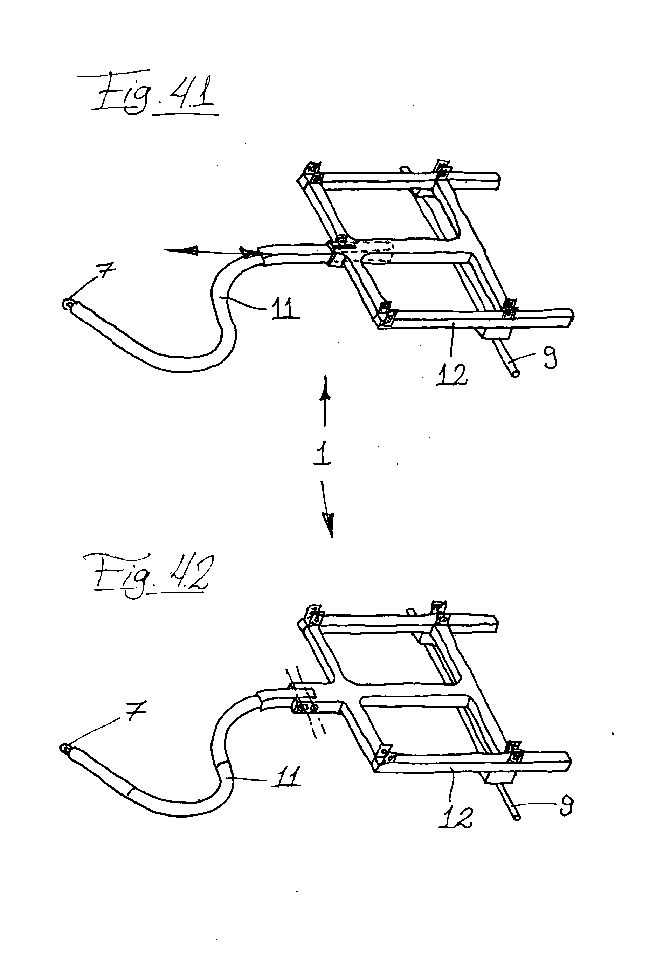

In order to reduce the space of the trailer when folded, the chassis 1 of the trailer A or B can be bipartite in its central portion, so the chassis 1 comprises in the front portion 11 the connection joint 7 and in the rear portion 12 the rotation axle 9 of the wheels; such portions can be joined by hinges or be telescopic as representing respectively the fig. 4.1 and 4.2.

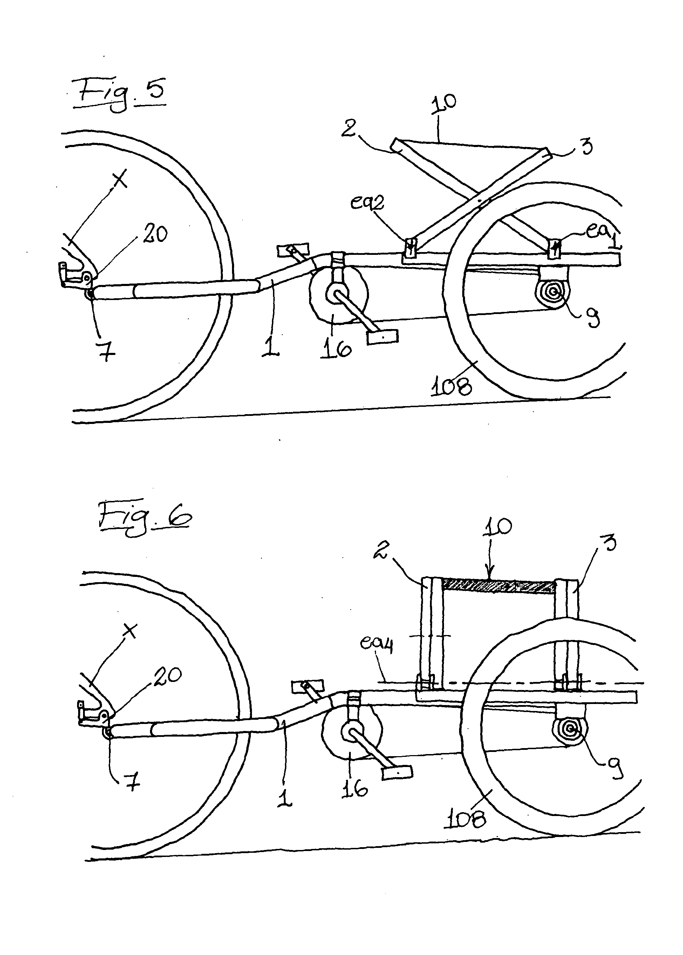

According to fig. 5 and 6, the first variation provided is the installation of an auxiliary pedaling system 16 equipped with crown, chain and freewheel on the front portion of chassis 1 of trailer A or B, this variation allows the passenger 4 to drive the rotation axle 9, such variation is called A2 or B2.

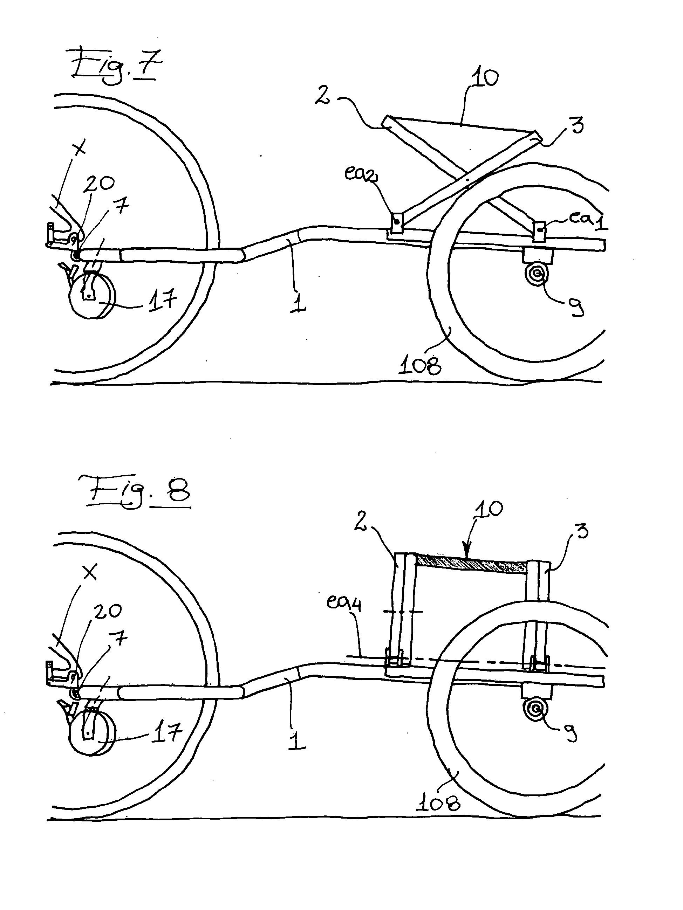

In order to allow the trailer has multipurpose when disconnected from bicycle X, able to work such as a wheelbarrow, cart or wheelchair, an auxiliary wheel 17 is installed under the chassis 1 of the trailer A or B figs. 7 and 8, these are variations A3 and B3.

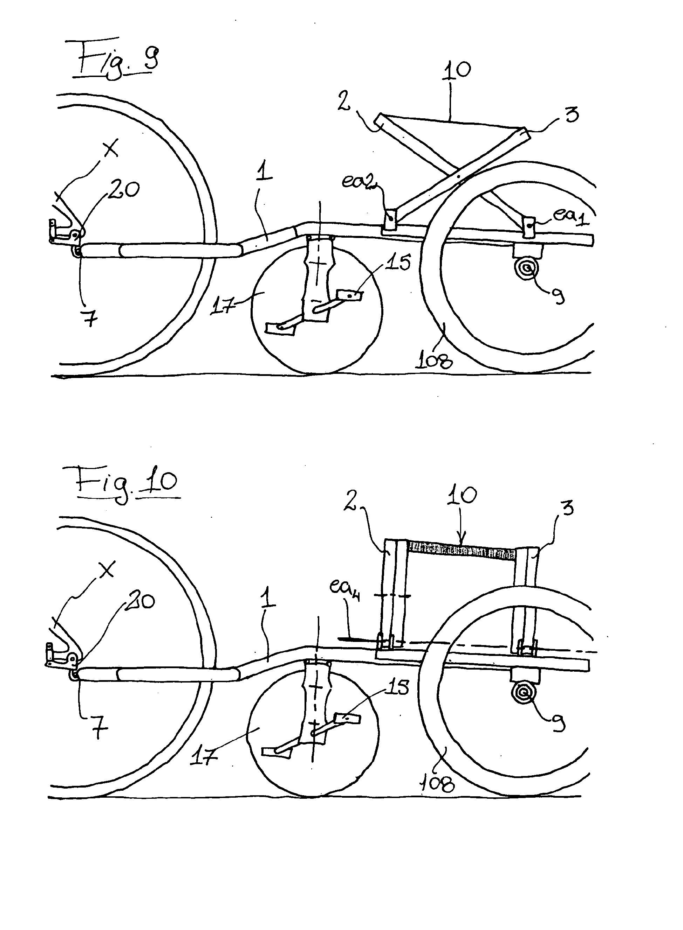

Figs. 9 and 10 illustrate the variation A4 and B4 of the trailer, characterized by the auxiliary wheel 17 has pedals 15 for direct driving assistance of the passenger 4.

Trailers A, B and their variations have a connection joint 7 that connects to a hitch 20 fixed permanently or not to the bicycle X frame. So that between the trailer and the bike will not occur in translation, but rotation preferably in the three rotation axes X, Y, Z, figs. 1 and 2.

These degrees of freedom occur if the connection joint 7 is a ball joint and are important because:

The rotation of the trailer around a Z axis, orthogonal to the direction of motion, allows the whole bicycle/trailer get in climbs and pass through obstacles such as bumps and holes more easily.

The rotation of the trailer around a Y axis perpendicular to the ground allows the whole bicycle/trailer make curves without tires slip.

The rotation of the trailer around the longitudinal axis of translation X allows the load does not move during the tilt of the bicycle X so that is saved rider's energy.

Figs. 1 and 2 show a ball-and-socket joint, fixed to the left side of the rear of the bicycle X frame, as the hitch 20, such conception is the simplest.

## Claims

1. "FOLDABLE BICYCLE TRAILER" (A) comprising:
a chassis (1), said chassis (1) having at its front end a connection joint (7), said connection
joint (7) attaching via an appropriate hitch (20) the said trailer (A) to a generical bicycle (X) and said connection joint (7) having preferably the 3 rotation degrees of freedom;
a rotation axle (9) of a right wheel (8) and a left wheel (108) being under the said chassis (1);
**characterized by** the said trailer (A) has a opposite u-shaped crossbar (2) and a u-shaped crossbar (3) connected at their lower ends to the top of said chassis (1) via an anterior pivotal axis (e_{A1}) and a posterior pivotal axis (e_{A2}) respectively, the said anterior pivotal axis (e_{A1}) and posterior pivotal axis (e_{A2}) are orthogonal to trailer's movement direction, so the said u-shaped crossbar (3) and said opposite u-shaped crossbar (2) can cross each other to support an element (10) that supports a passenger (4).

2. Trailer as in claim 1, called variation A2, **characterized by** having an auxiliary pedaling system (16) equipped with crown, chain and freewheel for driving of said rotation axle (9).

3. Trailer as in claim 1, called variation A3, **characterized by** having an auxiliary wheel (17) under the said chassis (1).

4. Trailer as in claim 3, called variation A4, wherein said auxiliary wheel (17) has pedals (15) for direct driving.

5. Trailer as in claim 1, wherein said chassis (1) is bipartite in a front portion (11) which contains the said connection joint (7) and in a rear portion (12) which contains the said rotation axle (9) of the wheels.

6. "FOLDABLE BICYCLE TRAILER" (B) comprising:
a chassis (1), said chassis (1) having at its front end a connection joint (7), said connection
joint (7) attaching via an appropriate hitch (20) the said trailer (B) to a generical bicycle (X) and said connection joint (7) having preferably the 3 rotation degrees of freedom;
a rotation axle (9) of a right wheel (8) and a left wheel (108) being under the said chassis (1);
**characterized by** the said trailer (B) has a u-shaped crossbar (3) and a opposite u-shaped crossbar (2) connected at their lower ends to right and left sides of top of said chassis (1) via a right pivotal axis (e_{A3}) and a left pivotal axis (e_{A4}) respectively, the said right pivotal axis (e_{A3}) and left pivotal axis (e_{A4}) are parallel to trailer's movement direction, so the said u-shaped crossbar (3) and said opposite u-shaped crossbar (2) can cross each other to support an element (10) that supports a passenger (4).

7. Trailer as in claim 6, called variation B2, **characterized by** having an auxiliary pedaling system (16) equipped with crown, chain and freewheel for driving of said rotation axle (9).

8. Trailer as in claim 6, called variation B3, **characterized by** having an auxiliary wheel (17) under the said chassis (1).

9. Trailer as in claim 8, called variation B4, wherein said auxiliary wheel (17) has pedals (15) for direct driving.

10. Trailer as in claim 6, wherein said chassis (1) is bipartite in a front portion (11) containing the said connection joint (7) and in a rear portion (12) containing the said rotation axle (9) of the wheels.
